# EUROPEAN PATENT APPLICATION

(11) **EP 4 817 393 A1**
(43) Date of publication of application: **07.10.2026**
(21) Application number: 25747830.5
(22) Date of filing: 24.01.2025
(51) Int. Cl.: A01D 34/74, A01D 34/82, A01D 75/20, A01D 75/18, A01D 34/73

(54) **LIFTING/LOWERING MECHANISM AND AUTONOMOUS MOBILE APPARATUS**

(30) Priority: 04.02.2024 CN 202420274014 U; 04.02.2024 CN 202420281167 U; 04.02.2024 CN 202420273981 U
(71) Applicant: Shenzhen Mammotion Innovation Co., Limited, Shenzhen, Guangdong 518000 (CN)
(72) Inventor: WEI, Jidong, Shenzhen, Guangdong 518000 (CN); XU, Yuanjun, Shenzhen, Guangdong 518000 (CN); PEI, Lei, Shenzhen, Guangdong 518000 (CN); HUA, Jinfeng, Shenzhen, Guangdong 518000 (CN)
(74) Representative: Huang, Liwei
(86) International application number: PCT/CN2025/074713
(87) International publication number: WO 2025/162262

(57) **Abstract**

A lifting mechanism and an autonomous mobile device. The lifting mechanism includes: a fixed assembly connected to a body; a first link member, one end of which is rotatably connected to the fixed assembly, and another end of which is rotatably connected to a cutting mechanism; a second link member, one end of which is rotatably connected to the fixed assembly, and another end of which is rotatably connected to the cutting mechanism; an adjusting member, having an abutting end facing the second link member, wherein the abutting end abuts against the second link member when the first link member rotates to a first position and the second link member rotates to a second position.

## Description

This patent claims priority to Chinese Patent Application No. 2024202740141 filed on February 04, 2024, Chinese Patent Application No. 2024202811679 filed on February 04, 2024, and Chinese Patent Application No. 2024202739816 filed on February 04, 2024 with the China National Intellectual Property Administration, all of which are incorporated herein by reference in their entireties.

### TECHNICAL FIELD

The present disclosure relate to the field of robotics technology, and in particular, to a lifting mechanism and an autonomous mobile device.

### BACKGROUND TECHNOLOGY

With the development of mobile robot technology, more and more robots have entered people's daily lives in recent years. An intelligent lawn mowers which are capable of automatically mowing a user's lawn, have also gradually become popular as a type of autonomous mobile device.

A lawn mower, also known as a weed whacker, a grass cutter, a lawn trimmer, etc., is a mechanical tool configured to trim lawns, vegetation, and the like. During a cutting process, due to terrain undulations or different heights of different lawns and vegetation, a cutting mechanism of the lawn mower needs to be correspondingly adjusted in height. However, a lifting device used for adjusting height in implementations of some existing techniques or designs has a complex structure and cumbersome operations, thereby affecting work efficiency.

### SUMMARY

In view of this, this disclosure proposes a lifting mechanism and an autonomous mobile device.

A first aspect of this disclosure provided a lifting mechanism, comprising: a fixing assembly, configured to be mounted to a body of an autonomous mobile device;
a first link member having a first end and a second end opposite to the first end, wherein the first end being rotatably connected to the fixing assembly, the second end being configured to be rotatably connected to a cutting mechanism of the autonomous mobile device, the first link member is rotatable in a first rotational direction and a second rotational direction, and the first rotational direction is opposite to the second rotational direction;
a second link member having a third end and a fourth end opposite to the third end, wherein the third end being rotatably connected to the fixing assembly, the fourth end being configured to be rotatably connected to the cutting mechanism of the autonomous mobile device, and the second link member is rotatable in the first rotational direction and the second rotational direction; and an adjusting member connected to the first link member, the adjusting member having an abutting end facing the second link member, wherein when the first link member rotating to a first position in the first rotational direction and the second link member rotating to a second position in the first rotational direction, the abutting end abuts against the second link member; wherein the adjusting member is configured to adjust a distance between the abutting end and the first link member.

A second aspect of this disclosure provided an autonomous mobile device, comprising: a body; a cutting mechanism; and the lifting mechanism of the first aspect, wherein the cutting mechanism is configured to cut a target object, the lifting mechanism is connected to the body and the cutting mechanism to enable the cutting mechanism to ascend or descend.

It can be seen from the foregoing technical solutions that, in the lifting mechanism provided in the present disclosure, the first link member and the second link member are provided so as to be capable of rotating upward and downward relative to the fixing assembly, thereby enabling the cutting mechanism to float upward and downward. Since, during downward rotation of the first link member and the second link member, a distance between the first link member and the second link member gradually decreases, when the abutting end abuts against the second link member, downward rotation of the first link member and the second link member is limited, so as to limit a lowest position of the cutting mechanism.

With the adjusting member, a distance between the abutting end and the first link member can be adjusted, that is, an extension length of the abutting end toward the second link member can be adjusted, thereby adjusting a limit position to which the first link member and the second link member are allowed to rotate downward. Accordingly, a lowest height for upward and downward floating of the cutting mechanism can be adjusted according to terrain undulations or heights of different vegetation such as lawns. The operation is simple, and working efficiency is improved.

### BRIEF DESCRIPTION OF DRAWINGS

In order to more clearly illustrate the technical solutions of embodiments of this disclosure, drawings needed in the description of the embodiments will be briefly introduced below. Obviously, the drawings in the following description are some embodiments of this disclosure. For those of ordinary skill in the art, other drawings may also be obtained based on these drawings without creative efforts.
FIG. 1 is a schematic diagram showing a connection between a lifting mechanism and a cutting mechanism according to an embodiment of this disclosure;
FIG. 2 is a cross-sectional schematic diagram of the structure shown in FIG. 1;
FIG. 3 is a structural schematic diagram of a lifting mechanism according to an embodiment of this disclosure;
FIG. 4 is a cross-sectional schematic diagram of the structure shown in FIG. 3;
FIG. 5 is a schematic diagram showing a first link member and a second link member parallel to a horizontal plane according to an embodiment of this disclosure;
FIG. 6 is a schematic diagram of the structure shown in FIG. 5 rotated downwards by 30 degrees;
FIG. 7 is an exploded schematic diagram of a first link member, a second link member, and an adjusting member according to an embodiment of this disclosure;
FIG. 8 is a structural schematic diagram of a gasket disposed within a groove of a second inner wall according to an embodiment of this disclosure;
FIG. 9 is a framework schematic diagram of an autonomous mobile device according to an embodiment of this disclosure;
FIG. 10 is a first-perspective exploded schematic diagram of a cutting mechanism according to an embodiment of this disclosure;
FIG. 11 is a second-perspective exploded schematic diagram of a cutting mechanism according to an embodiment of this disclosure;
FIG. 12 is a structural schematic diagram showing a fan structure and a connection structure as the same component according to an embodiment of this disclosure;
FIG. 13 is a structural schematic diagram of a cutting mechanism according to an embodiment of this disclosure;
FIG. 14 is a cross-sectional schematic diagram of the structure shown in FIG. 13;
FIG. 15 is a structural schematic diagram of a cutting blade according to an embodiment of this disclosure;
FIG. 16 is a schematic diagram showing one planar structure of a cutting blade according to an embodiment of this disclosure;
FIG. 17 is a schematic diagram showing another planar structure of a cutting blade according to an embodiment of this disclosure;
FIG. 18 is a schematic diagram showing yet another planar structure of a cutting blade according to an embodiment of this disclosure;
FIG. 19 is a schematic diagram showing still another planar structure of a cutting blade according to an embodiment of this disclosure.

Reference numerals: 100, lifting mechanism; 10, fixing assembly; 11, matching portion; 20, first link member; 21, first end; 211, first extension portion; 212, second extension portion; 22, second end; 23, first inner wall; 24, first rotation shaft; 25, second rotation shaft; 30, second link member; 31, third end; 32, fourth end; 33, second inner wall; 331, groove; 34, third rotation shaft; 35, fourth rotation shaft; 40, adjusting member; 41, abutting end; 42, rod body; 421, first segment; 422, second segment; 43, knob; 431, convex ridge; 50, elastic member; 60, gasket; 600, cutting mechanism; 610, mounting member; 611, mounting hole; 620, cutting member; 621, first cutting member; 622, second cutting member; 620a, first side; 620b, second side; 623, annular protrusion; 624, cutter disk; 630, driving member; 631, motor; 640, abutting member; 641, abutting surface; 650, first connecting member; 651, first protruding post; 660, second connecting member; 661, second protruding post; 670, fan structure; 671, bottom plate; 6711, connection shaft; 672, blade; 680, linkage assembly; 1, autonomous mobile device; 700, body; 800, traveling mechanism; 910, driving connection portion; 911, matching hole; 920, base; 921, first base portion; 922, second base portion; 920a, third side; 920b, fourth side; 930, cutting member; 940, protection member; 941, first surface; 942, second surface; 943, edge.

### DETAILED DESCRIPTION

The technical solutions in the embodiments of the present disclosure will be clearly and completely described below with reference to the accompanying drawings in the embodiments of the present disclosure. It is apparent that the described embodiments are merely some, rather than all, of the embodiments of the present application. All other embodiments obtained by a person of ordinary skill in the art based on the embodiments of the present disclosure without creative effort shall fall within the protection scope of the present disclosure.

It should be understood that all directional indications in the embodiments of the present disclosure, such as up, down, left, right, front, rear, and the like, are merely used to explain relative positional relationships, movement conditions, and the like between various components in a certain specific posture. If the specific posture changes, the directional indications also change accordingly.

It should also be understood that when an element is referred to as being "fixed to" or "disposed on" another element, the element may be directly on the other element, or an intervening element may also be present. When an element is referred to as being "connected to" another element, the element may be directly connected to the other element, or may also be indirectly connected to the other element through an intervening element.

The terms used in the specification of the present application are merely for the purpose of describing specific embodiments and are not intended to limit the present disclosure. Descriptions involving "first," "second," and the like in the present disclosure are used merely for descriptive purposes, and should not be construed as indicating or implying relative importance or implicitly indicating the number of the indicated technical features. Accordingly, a feature defined with "first," "second," or the like may explicitly or implicitly include at least one such feature.

It should further be understood that, as used in the specification and the appended claims of the present application, the term "and/or" refers to any and all possible combinations of one or more of the associated listed items, and includes such combinations.

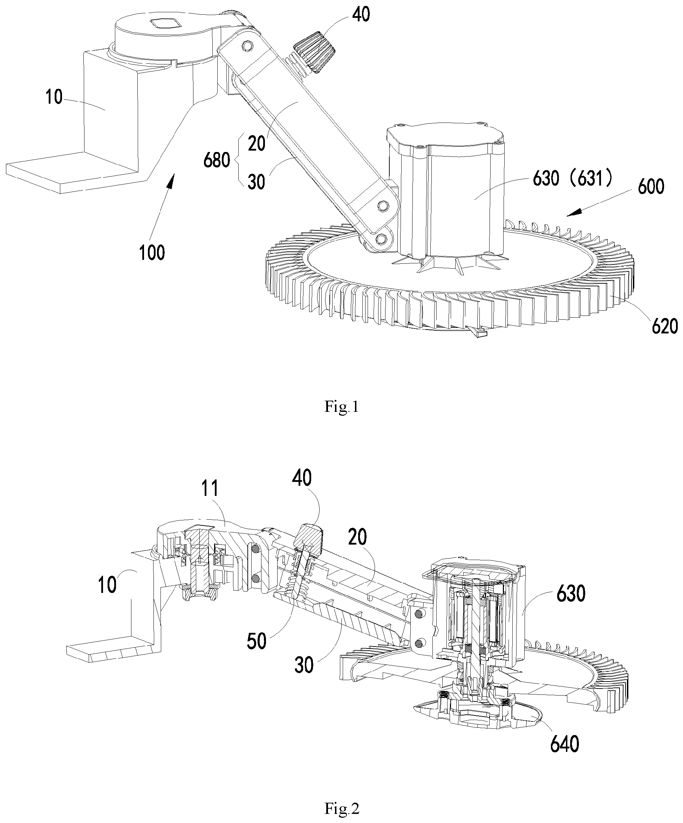

Referring to FIG. 1 to FIG. 5, this disclosure provides a lifting mechanism 100, comprising a fixing assembly 10, a first link member 20, a second link member 30, and an adjusting member 40. The fixing assembly 10 is configured to be mounted on a body 700 of an autonomous mobile device 1. The first link member 20 has a first end 21 and a second end 22 opposite to each other. The first end 21 is rotatably connected to the fixing assembly 10. The second end 22 is configured to be rotatably connected to a cutting mechanism 200 of the autonomous mobile device 1. The first link member 20 is rotatable in a first rotational direction and a second rotational direction, and the first rotational direction is opposite to the second rotational direction. The second link member 30 has a third end 31 and a fourth end 32 opposite to each other. The third end 31 is rotatably connected to the fixing assembly 10. The fourth end 32 is configured to be rotatably connected to the cutting mechanism 200 of the autonomous mobile device 1. The second link member 30 is rotatable along the first rotational direction and the second rotational direction. The adjusting member 40 is connected to the first link member 20. The adjusting member 40 has an abutting end 41 facing the second link member 30. In response to the first link member 20 rotating to a first position along the first rotational direction and the second link member 30 rotating to a second position along the first rotational direction, the abutting end 41 abuts against the second link member 30. The adjusting member 40 is configured to adjust a distance between the abutting end 41 and the first link member 20.

In specific applications, when the lifting mechanism 100 is mounted on the autonomous mobile device 1, the first rotational direction may be a downward direction, and the second rotational direction may be an upward direction. That is, the first link member 20 and the second link member 30 may rotate up and down. The first position is an extreme position of downward rotation of the first link member 20, and the second position is an extreme position of downward rotation of the second link member 30.

In specific applications, when the lifting mechanism 100 is mounted on the autonomous mobile device 1, due to gravity of the cutting mechanism 200, an initial position of the cutting mechanism 200 is at an extreme position of downward rotation. At this time, the abutting end 41 of the adjusting member 40 abuts against the second link member 30 to prevent the first link member 20 and the second link member 30 from rotating downwards. When encountering raised ground or hard objects such as stones on the ground, the cutting mechanism 200 will be pushed upward to avoid interference with the cutting mechanism 200. When a height of the lawn on the ground is relatively high or relatively low, the distance between the abutting end 41 and the first link member 20 may be adjusted by the adjusting member 40, that is, the extreme position of downward rotation of the first link member 20 and the second link member 30 may be adjusted, so as to raise or lower the initial position of the cutting mechanism 200. In this way, the cutting mechanism 200 can be adapted to the height of the lawn for cutting.

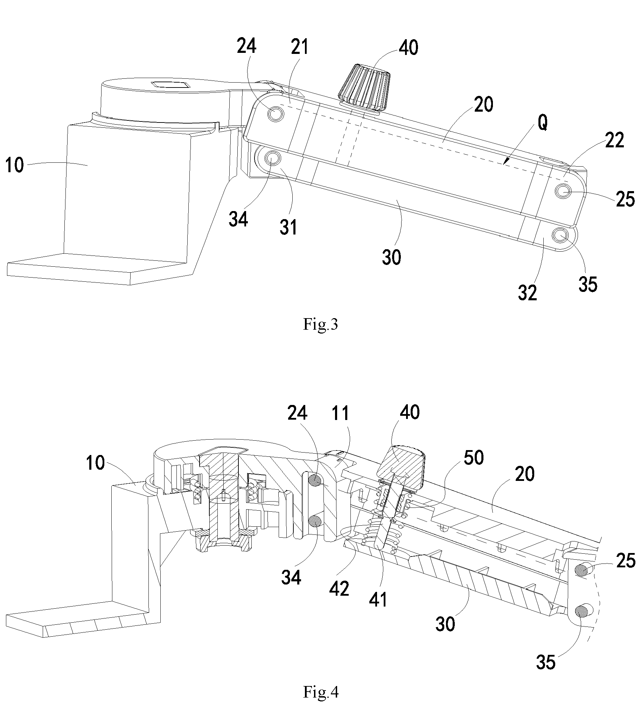

In some embodiments, as shown in FIG. 3 to FIG. 6, respective rotation axes of the first end 21, the second end 22, the third end 31, and the fourth end 32 are arranged in parallel to each other. Four projection points of the rotation axes of the first end 21, the second end 22, the third end 31, and the fourth end 32 on a first plane are connected to form a parallelogram. The first plane is perpendicular to the rotation axes of the first end 21, the second end 22, the third end 31, and the fourth end 32. Accordingly, the dual-link structure formed by the first link member 20 and the second link member 30 can drive the cutting mechanism 200 to move upward and downward in a stable manner.

In specific applications, as shown in FIG. 3 and FIG. 4, the first end 21 is rotatably connected to the fixing assembly 10 via a first rotation shaft 24, the second end 22 is rotatably connected to the cutting mechanism 200 via a second rotation shaft 25, the third end 31 is rotatably connected to the fixing assembly 10 via a third rotation shaft 34, and the fourth end 32 is rotatably connected to the cutting mechanism 200 via a fourth rotation shaft 35. The four projection points of the first rotation shaft 24, the second rotation shaft 25, the third rotation shaft 34, and the fourth rotation shaft 35 on the first plane are connected to form a parallelogram, and the first plane is perpendicular to the first rotation shaft 24, the second rotation shaft 25, the third rotation shaft 34, and the fourth rotation shaft 35.

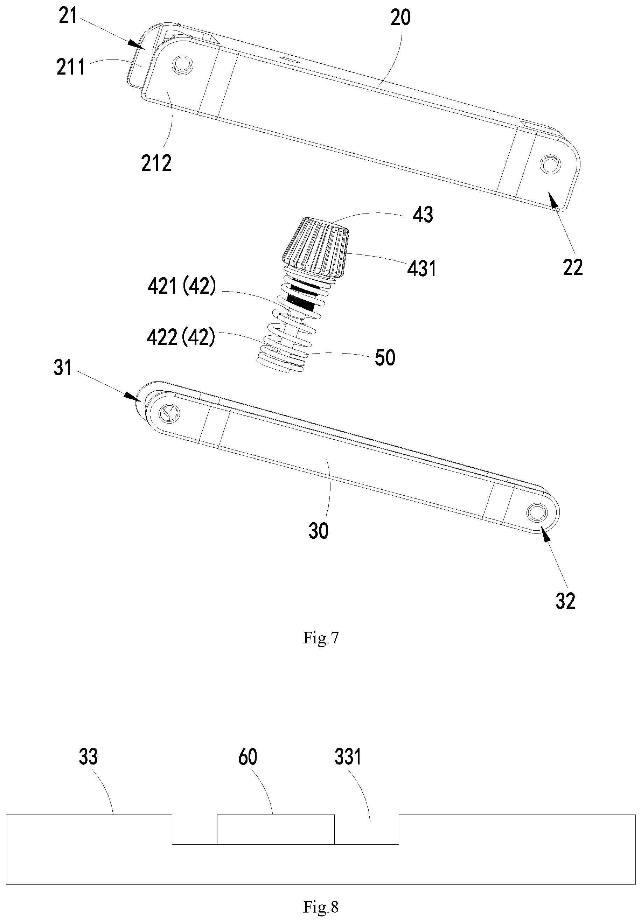

In some embodiments, as shown in FIG. 4 and FIG. 7, the fixing assembly 10 is provided with a matching portion 11, and the first end 21 is rotatably connected to the fixing assembly 10 via the first rotation shaft 24. The first end 21 is provided with a first extension portion 211 and a second extension portion 212 disposed opposite to each other along an axial direction of the first rotation shaft 24. The first extension portion 211 and the second extension portion 212 are respectively disposed on two sides of the matching portion 11. The first rotation shaft 24 penetrates through the first extension portion 211, the matching portion 11, and the second extension portion 212, so that the first end 21 is rotatably connected to the matching portion 11.

Optionally, rotation connection manners of the second end 22 and the cutting mechanism 200, the third end 31 and the fixing assembly 10, and the fourth end 32 and the cutting mechanism 200 may refer to the above rotation connection manner of the first end 21 and the matching portion 11, which will not be repeated herein.

Certainly, the rotation connection manners of the first end 21 and the fixing assembly 10, the second end 22 and the cutting mechanism 200, the third end 31 and the fixing assembly 10, and the fourth end 32 and the cutting mechanism 200 may also adopt other manners, as long as synchronous rotation of the first link member 20 and the second link member 30 may be achieved to drive the cutting mechanism 200 to move upward and downward.

In some embodiments, as shown in FIG. 4 to FIG. 7, the adjusting member 40 includes a rod body 42. The rod body 42 is threadedly connected to the first link member 20. One end of the rod body 42 faces the second link member 30 to form the abutting end 41. By rotating the rod body 42, the abutting end 41 is driven to move toward or move away from the first link member 20. Thus, through the threaded connection between the rod body 42 and the first link member 20, rotating the rod body 42 may drive the abutting end 41 to adjust the distance from the first link member 20. When the rod body 42 is screwed outward, that is, the distance between the abutting end 41 and the first link member 20 is shortened, the initial position of the cutting mechanism 200 drops. When the rod body 42 is screwed inward, that is, the distance between the abutting end 41 and the first link member 20 is increased, the initial position of the cutting mechanism 200 is raised. Thus, it is convenient to adjust an initial height of the cutting mechanism 200.

In some embodiments, the rod body 42 may be completely provided with external threads. Certainly, in some other examples, only a part of the rod body 42 may be provided with external threads.

As an implementation manner, the rod body 42 includes a first segment 421 and a second segment 422. The first segment 421 is threadedly connected to the first link member 20, and protrudes out of the first link member 20. One end of the second segment 422 is connected to the first segment 421, and another end of the second segment 422 faces the second link member 30 to form the abutting end 41. By rotating the first segment 421, the second segment 422 is driven to approach or move away from the first link member 20, thereby adjusting the distance between the abutting end 41 and the first link member 20. Through the threaded connection manner, it is convenient to screw outward or screw inward the rod body 42, thereby conveniently adjusting the initial height of the cutting mechanism 200.

In some embodiments, the adjusting member 40 further comprises a knob 43. The knob 43 is connected to an end of the rod body 42 facing away from the abutting end 41, that is, connected to an end of the first segment 421 protruding out of the first link member 20. The knob 43 is configured to be grasped by an operator to drive the rod body 42 to rotate. Through the arrangement of the knob 43, the operator may conveniently grasp the knob 43 to control the rod body 42 to rotate, thereby adjusting the distance between the abutting end 41 and the first link member 20.

In an optional embodiment, an outer peripheral wall of the knob 43 is provided with convex ridges 431, to increase friction when the operator grasps the knob 43. Through the arrangement of the convex ridges 431, friction may be increased, so that it is convenient for the operator to apply an acting force to the knob 43 to facilitate rotation of the rod body 42.

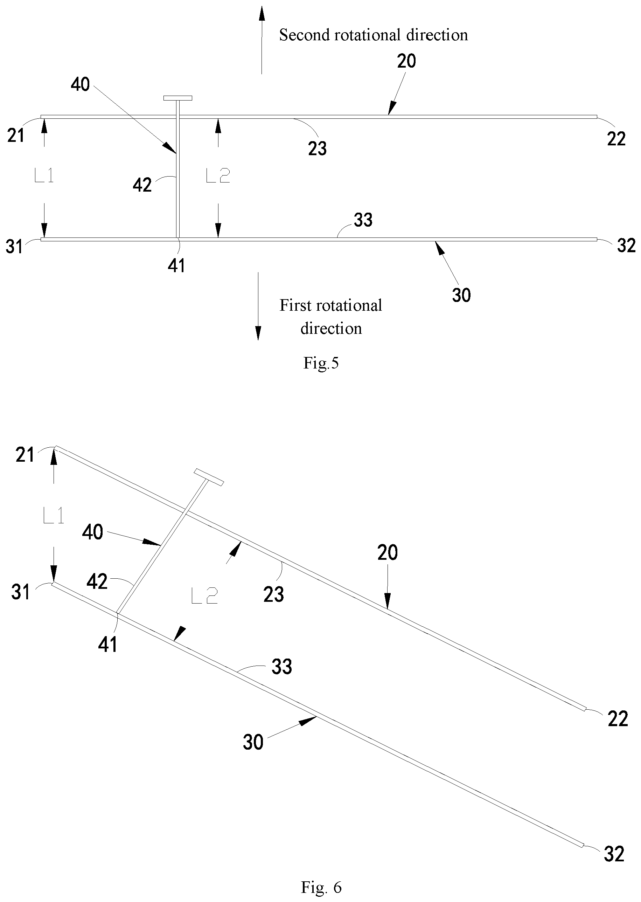

In some embodiments, as shown in FIG. 5 to FIG. 6, the first link member 20 is arranged in parallel with the second link member 30, thereby stably driving the cutting mechanism 200 to move upward and downward. Wherein, the first link member 20 and the second link member 30 are restricted to be capable of rotating downward by 30° to 60° to an extreme position, thereby providing a sufficient range for the cutting mechanism 200 to adjust height.

In some embodiments, the first link member 20 has a first inner wall 23 facing the second link member 30, and the second link member 30 has a second inner wall 33 disposed opposite to the first inner wall 23. when the first link member 20 rotating to the first position along the first rotational direction and the second link member 30 rotating to the second position along the first rotational direction, the abutting end 41 abuts against the second inner wall 33, to limit the rotation of the first link member 20 and the second link member 30 in the first rotational direction. When the lifting mechanism 100 is mounted on the autonomous mobile device 1, the first rotational direction may be a downward direction. When the abutting end 41 abuts against the second inner wall 33, it limits the first link member 20 and the second link member 30 from rotating downwards, to limit the lowest position of the cutting mechanism 200. Through the arrangement of the adjusting member 40, the distance between the abutting end 41 and the first inner wall 23 may be adjusted, that is, an extension length of the abutting end 41 facing the second inner wall 33 may be adjusted, thereby adjusting an extreme position to which the first link member 20 and the second link member 30 are capable of rotating downward. Thus, a lowest height of upward and downward floating of the cutting mechanism 200 may be adjusted based on terrain undulations or different heights of vegetation such as lawns. The operation is simple, and work efficiency is improved.

In some embodiments, as shown in FIG. 3 to FIG. 6, a connecting line Q between the first end 21 and the second end 22 is arranged perpendicular to the rod body 42. Thus, it is convenient to adjust a distance between the rod body 42 and the first link member 20.

For example, a distance between the first rotation shaft 24 and the third rotation shaft 34 is defined as a first preset distance L1. A distance between the abutting end 41 and the first inner wall 23 capable of being adjusted by the adjusting member 40 is a second preset distance L2. When the first link member 20 and the second link member 30 are both perpendicularly disposed relative to the fixing assembly 10, that is, the first link member 20 and the second link member 30 are parallel to the ground, as shown in FIG. 5, L1 is equal to L2. When the first link member 20 and the second link member 30 rotate downward by 30°, as shown in FIG. 6, since the rod body 42 is always perpendicular to the first inner wall 23, L1 corresponds to a hypotenuse of a right-angled triangle, and L2 corresponds to an adjacent side of the right-angled triangle. At this time, L2/L1 = cos 30° = √3/2. That is, when the first link member 20 and the second link member 30 need to be restricted from rotating downward by 30° to an extreme position, the adjusting member 40 may be rotated, so that a distance L2 between the abutting end 41 of the adjusting member 40 and the first inner wall 23 is √3/2 L1. When the first link member 20 and the second link member 30 rotate downward by 60°, L2/L1 = cos 60° = 1/2. That is, when the first link member 20 and the second link member 30 need to be restricted from rotating downward by 60° to an extreme position, the adjusting member 40 may be rotated, so that the distance L2 between the abutting end 41 of the adjusting member 40 and the first inner wall 23 is 1/2 L1.

In some embodiments, as shown in FIG. 4 to FIG. 7, the lifting mechanism 100 further comprises an elastic member 50. The elastic member 50 is sleeved on the adjusting member 40, and abuts between the first inner wall 23 and the second inner wall 33. The elastic member 50 is configured to provide an elastic force to form a buffer when the cutting mechanism 200 moves upward and downward. For example, a compression spring sleeved on the rod body 42 may be adopted as the elastic member 50. Through the arrangement of the elastic member 50, a buffering effect may be played when the cutting mechanism 200 moves up and down, and stability of the cutting mechanism 200 during movement is improved.

In some embodiments, as shown in FIG. 7 and FIG. 8, a gasket 60 is disposed between the elastic member 50 and the second inner wall 33. Through the arrangement of the gasket 60, a friction force between the elastic member 50 and the second inner wall 33 may be reduced. When the abutting end 41 of the adjusting member 40 abuts against the second inner wall 33, the gasket 60 may also reduce a friction force between the abutting end 41 and the second inner wall 33, thereby reducing wear of the second inner wall 33.

In some embodiments, the second inner wall 33 is provided with a groove 331, and the gasket 60 is disposed in the groove 331 and is capable of sliding in the groove 331. Through the arrangement of the groove 331, the gasket 60 may be restricted, so as to prevent the gasket 60 from sliding off. Since the abutting end 41 of the adjusting member 40 abuts against different positions of the second inner wall 33 during rotation of the second link member 30, the gasket 60 is configured to be capable of sliding in the groove 331, thereby being able to slide in the groove 331 following movement of the abutting end 41, so as to avoid damaging the second inner wall 33 due to friction. For example, the gasket 60 may be made of a flexible material. For example, when the elastic member 50 adopts a compression spring, the groove 331 and the gasket 60 may be set to be circular. Certainly, the groove 331 and the gasket 60 may also be set to be square or other regular or irregular shapes. Certainly, in other embodiments, the gasket 60 may also be fixed in the groove 331. At this time, an area of the gasket 60 covers a sliding trajectory of the elastic member 50, so as to reduce wear of the second inner wall 33.

An embodiment of this disclosure further proposes an autonomous mobile device 1, comprising a body 700, a cutting mechanism 200, and the above lifting mechanism 100. The cutting mechanism 200 is configured to cut a target object. The lifting mechanism 100 is connected to the body 700 and the cutting mechanism 200 to enable the cutting mechanism 200 to ascend or descend through the lifting mechanism 100. Wherein, as shown in FIG. 1 and FIG. 2, the cutting mechanism 200 may include a cutter disk 624 and a driving member 630 configured to drive the cutter disk 624 to rotate, thereby cutting vegetation such as lawns. In specific applications, the autonomous mobile device 1 may be a lawn mowing robot capable of autonomously moving.

Structure and function of the lifting mechanism 100 in the autonomous mobile device 1 proposed in the embodiment of this disclosure are identical to those in the above embodiments, which may specifically refer to the descriptions of the above embodiments, and will not be repeated in this embodiment.

For example, the driving member 630 includes a motor 631.

In some implementation manners, the autonomous mobile device 1 further comprises a traveling mechanism 800. The traveling mechanism 800 is configured to drive the autonomous mobile device to move in a target place.

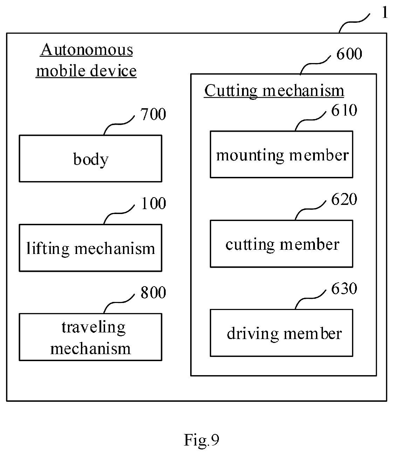

As shown in FIG. 1 to FIG. 19, the cutting mechanism 200 is described in detail: The cutting mechanism 200 includes a mounting member 610, a cutting member 620, a driving member 630, and an abutting member 640. The cutting member 620 is mounted on the mounting member 610, and the cutting member 620 is configured to cut a target object. The driving member 630 is configured to drive the mounting member 610 to move, to enable the mounting member 610 to drive the cutting member 620 to move in a preset region. The abutting member 640 is located below the mounting member 610, and is configured to abut against an object below the preset region.

In specific applications, the preset region may be a cutting area of the cutting member 620 within a certain height area range. A movement trajectory of the cutting member 620 covers the preset region, to cut the target object in the preset region. The target object may be grass or other plants that need to be cut. The object below the preset region may be an obstacle, or may be ground. The obstacle may be a foot of an operator accidentally reaching below the cutting member 620 or a stone on the ground or other objects. When the operator's foot accidentally reaches below the cutting member 620, the abutting member 640 interferes with the operator's foot, thereby preventing the operator's foot from directly contacting the cutting member 620 and causing injury.

In some embodiments, the abutting member 640 is connected to the cutting member 620. The connection may be a direct connection or an indirect connection. By generating friction between the abutting member 640 and the operator's foot to form a resistance force, since the abutting member 640 is connected to the cutting member 620, a cutting speed of the cutting member 620 may be reduced, thereby avoiding a secondary injury to the operator's foot caused by the cutting member 620 rotating at a high speed.

In addition, when the abutting member 640 contacts an object below the preset region, such as contacting ground or a stone, a reaction force may also be generated to drive the cutting member 620 to be raised in height, thereby avoiding the cutting member 620 from directly contacting the object below the preset region and causing injury.

Therefore, in the cutting mechanism 600 proposed in the embodiments of this disclosure, through the arrangement of the abutting member 640, it is capable of interfering with an object when the object appears below the preset region. While being able to drive the cutting member 620 away from the object below the preset region, it is also capable of reducing the cutting speed of the cutting member 620, avoiding contact between the cutting member 620 rotating at a high speed and the object, avoiding secondary injury, and improving use safety of the cutting mechanism 600.

In some embodiments, the cutting member 620 has a first side 620a and a second side 620b disposed opposite to each other. Wherein, the driving member 630 is located on the first side 620a of the cutting member 620, the abutting member 640 is located on the second side 620b of the cutting member 620, and the preset region is located between the driving member 630 and the abutting member 640. Thus, interference between the cutting member 620 and the driving member 630 or the abutting member 640 when the cutting member 620 moves in the preset region may be avoided. Moreover, the driving member 630 and the abutting member 640 are respectively disposed on two opposite sides of the cutting member 620, which has a compact structure and a reduced volume, and enables the abutting member 640 to face below the preset region, thereby avoiding direct contact between the cutting member 620 and an obstacle below.

During use, the cutting mechanism 600 may be mounted on an autonomous mobile device 1 such as a lawn mower. After the cutting mechanism 600 is mounted on the lawn mower, the first side 620a and the second side 620b are upper and lower sides of the cutting member 620, the driving member 630 is located above the mounting member 610, the abutting member 640 is located below the mounting member 610, and a lower side is a side of the cutting mechanism 600 close to ground.

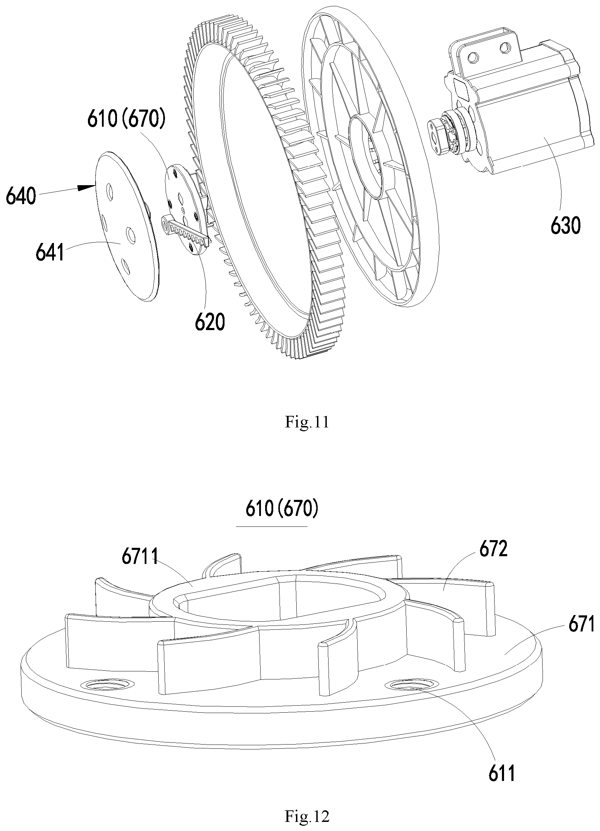

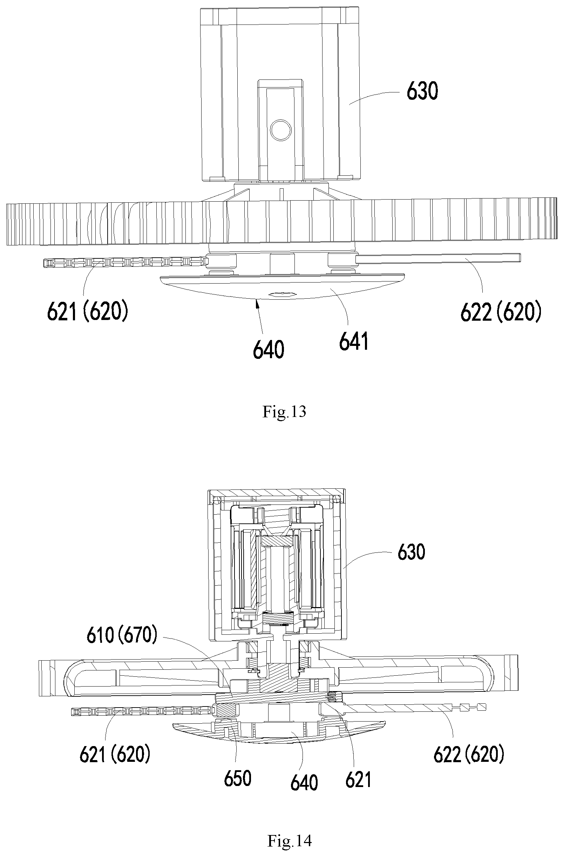

In some embodiments, as shown in FIG. 11 and FIG. 13, a side of the abutting member 640 facing away from the cutting member 620 has an abutting surface 641. A distance between an edge of the abutting surface 641 and the cutting member 620 is less than a distance between a center of the abutting surface 641 and the cutting member 620. That is, the center position of the abutting surface 641 is more prominent relative to the cutting member 620 compared to its edge position, and a prominent position at the center of the abutting surface 641 may contact an object below the preset region, which facilitates the abutting surface 641 driving the cutting member 620 to be raised in height, avoiding the cutting member 620 from directly contacting the object and causing injury. Optionally, the abutting surface 641 is a convex curved surface structure. Thus, through the arrangement of the curved surface structure, friction may be reduced when contacting an obstacle. For example, when an operator's foot accidentally reaches below the cutting member 620, the curved surface structure of the abutting member 640 may contact the operator's foot, thereby reducing injury to the operator. Certainly, the abutting surface 641 is not limited to the above arrangement. For example, in some other embodiments, the distance between the edge of the abutting surface 641 and the cutting member 620 is equal to the distance between the center of the abutting surface 641 and the cutting member 620. That is, a distance between the center position of the abutting surface 641 and the cutting member 620 may also be equal to a distance between its edge position and the cutting member 620. Optionally, the abutting surface 641 is a planar structure. A shape of the abutting surface 641 may be circular or other regular or irregular shapes, so that a volume of the cutting mechanism 600 in a height direction is smaller, and it is capable of cutting close to the ground.

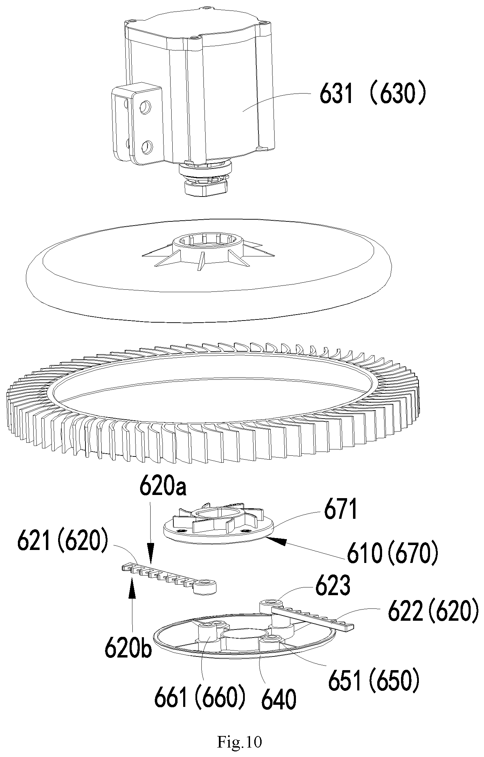

In some embodiments, as shown in FIG. 10, FIG. 11, and FIG. 12, the mounting member 610 is connected to an output shaft of the driving member 630, and the abutting member 640 is connected to the mounting member 610. Thus, through the arrangement of the mounting member 610, it is configured to install the cutting member 620 and the abutting member 640, and is connected to the output shaft of the driving member 630, to transmit a driving force of the driving member 630 to the abutting member 640 and the cutting member 620, thereby driving the abutting member 640 and the cutting member 620 to rotate synchronously.

As an implementation manner, the abutting member 640 and the cutting member 620 may be respectively mounted on the mounting member 610. For example, the abutting member 640 is fixed to the mounting member 610 by a screw, the cutting member 620 is fixed to the mounting member 610 by another screw, and the abutting member 640 is located below the cutting member 620.

As another implementation manner, the abutting member 640 and the cutting member 620 may be mounted on the mounting member 610 through a same group of fasteners. For example, a group of screws simultaneously connect the abutting member 640 and the cutting member 620 and are fixed to the mounting member 610, and the abutting member 640 is located below the cutting member 620.

As another implementation manner, the cutting member 620 may be installed above the abutting member 640, and the abutting member 640 may be mounted on the mounting member 610. For example, the cutting member 620 is fixed above the abutting member 640 through a screw, and then the abutting member 640 is fixed to the mounting member 610 through another screw or other fasteners.

In some embodiments, as shown in FIG. 10 and FIG. 14, the mounting member 610 and the abutting member 640 are connected by a first connecting member 650, and the first connecting member 650 penetrates through the cutting member 620. Thus, the abutting member 640 and the mounting member 610 are connected by the first connecting member 650, and the cutting member 620 is fixed between the abutting member 640 and the mounting member 610, which is convenient for disassembly and assembly, and has a compact structure and a reduced volume after installation.

In some embodiments, the first connecting member 650 may be integrally formed with the abutting member 640, thereby improving structural stability. Certainly, in other embodiments, the first connecting member 650 may alternatively be separately connected to the abutting member 640.

In some other embodiments, the mounting member 610 and the abutting member 640 may also be integrally formed to improve structural stability.

In some embodiments, the first connecting member 650 includes a first protruding post 651 and a fastener. The first protruding post 651 is disposed on one of the mounting member 610 and the abutting member 640, and is located between the mounting member 610 and the abutting member 640. An end of the cutting member 620 is provided with a annular protrusion 623 corresponding to the first protruding post 651. The annular protrusion 623 is sleeved on the first protruding post 651. The fastener penetrates through the first protruding post 651 and the annular protrusion 623 and is fixed to another of the mounting member 610 and the abutting member 640. Thus, through the arrangement of the first protruding post 651 and the annular protrusion 623, positioning of the fastener may be facilitated, thereby facilitating connection and installation among the abutting member 640, the cutting member 620, and the mounting member 610.

For example, as shown in FIG. 10 and FIG. 12, the first protruding post 651 is disposed on the abutting member 640 and protrudes toward the mounting member 610. The mounting member 610 is provided with an mounting hole 611 corresponding to the first protruding post 651. The fastener penetrates through the first protruding post 651 and the first annular protrusion 623 and is fixed to the mounting hole 611 of the mounting member 610, to facilitate fixing the abutting member 640 and the cutting member 620 to the mounting member 610 through a same group of mounting members 610. Certainly, in other examples, the first protruding post 651 may also be disposed on the mounting member 610. The first protruding post 651 of the mounting member 610 corresponds to the annular protrusion 623 of the cutting member 620. The fastener penetrates through the first protruding post 651 and the first annular protrusion 623 and is fixed to the abutting member 640.

For example, the fastener may be a screw. Fixing with a screw is not only convenient for disassembly and assembly, but also simple to operate and low in installation cost.

In some embodiments, two cutting members 620 are provided. The mounting member 610 and the abutting member 640 are connected by two first connecting members 650. Each of the two first connecting members 650 cooperates with a corresponding cutting member 620. The cutting member 620 is capable of rotating around the first connecting member 650. Thus, through the arrangement of the two first connecting members 650, connection stability between the abutting member 640 and the mounting member 610 may be improved.

In some embodiments, as shown in FIG. 10, FIG. 13, and FIG. 14, the mounting member 610 and the abutting member 640 are further connected by two second connecting members 660. Wherein, the two cutting members 620 are respectively a first cutting member 621 and a second cutting member 622. In response to the first cutting member 621 rotating clockwise to a first position, the first cutting member 621 abuts against one of the two second connecting members 660. In response to the second cutting member 622 rotating clockwise to a second position, the second cutting member 622 abuts against another of the two second connecting members 660. when the first cutting member 621 rotating counterclockwise to a third position, the first cutting member 621 abuts against the another of the two second connecting members 660. when the second cutting member 622 rotating counterclockwise to a fourth position, the second cutting member 622 abuts against the one of the two second connecting members 660. Thus, through the arrangement of the two second connecting members 660, a rotation range of the two cutting members 620 may be limited, thereby preventing the two cutting members 620 from colliding with each other.

For example, the cutting member 620 is a blade, and two blades are arranged axisymmetrically relative to the output shaft of the driving member 630. One end of each of the two blades opposite to each other is provided with a first annular protrusion 623. Through the arrangement of the two blades, cutting efficiency may be improved.

For example, the two first connecting members 650 may be symmetrically arranged, so that the two cutting members 620 are symmetrically arranged. The second connecting member 660 may include a second protruding post 661 disposed on the abutting member 640 and protruding toward the mounting member 610, and configured to be mounted to the mounting member 610. The two first protruding posts 651 and the two second protruding posts 661 are staggeredly arranged surrounding a center position of the abutting member 640, and an arrangement direction of the two second protruding posts 661 is perpendicular to an arrangement direction of the two first protruding posts 651, to improve connection stability between the abutting member 640 and the mounting member 610. At the same time, the two second protruding posts 661 may be configured to limit the rotation range of the two cutting members 620, so that rotation ranges of the two cutting members 620 are equal and do not interfere with each other.

In some embodiments, as shown in FIG. 10 to FIG. 12, the cutting mechanism 600 further comprises a fan structure 670. The fan structure 670 is connected to the output shaft of the driving member 630, and is located between the driving member 630 and the cutting member 620. The fan structure 670 is configured to rotate under driving of the driving member 630, to drive an airflow to blow toward the cutting member 620. When the cutting member 620 cuts a target object such as a lawn, garbage such as broken leaves may be thrown into an interior of the cutting mechanism 600, for example, thrown toward the driving member 630, thereby affecting operation of the driving member 630. Through the arrangement of the fan structure 670, an airflow blowing toward the ground may be formed, thereby blowing out garbage such as broken leaves, and avoiding garbage such as broken leaves from entering the interior of the cutting mechanism 600.

In some embodiments, the fan structure 670 includes a bottom plate 671 and a plurality of blades 672. The bottom plate 671 is connected to the output shaft of the driving member 630. The bottom plate 671 is provided with a connection shaft 6711 protruding toward the output shaft of the driving member 630. The plurality of blades 672 are annularly disposed around the connection shaft 6711. The fan structure 670 and the mounting member 610 may be a same component. That is, the bottom plate 671 may be configured to connect the cutting member 620 and the abutting member 640, so that the driving member 630 is capable of simultaneously driving the fan structure 670, the cutting member 620, and the abutting member 640 to rotate.

In some embodiments, a center position of the output shaft of the driving member 630, a center position of the fan structure 670, and a center position of the abutting member 640 are located on a same straight line. The output shaft of the driving member 630 may be connected to the fan structure 670 through a transmission structure such as a coupling or a reducer, to facilitate the driving member 630 driving the fan structure 670, the abutting member 640, and the cutting member 620 to rotate synchronously.

In another embodiment, the fan structure 670 and the mounting member 610 may also be different components. The fan structure 670 may be disposed on the mounting member 610, and connected to the output shaft of the driving member 630 through the mounting member 610. The driving member 630 drives the fan structure 670 to rotate by driving the mounting member 610 to rotate, to blow air.

In some embodiments, as shown in FIG. 1, the cutting mechanism 600 further comprises an installation mechanism 680. The installation mechanism 680 includes a fixing assembly 10 and a linkage assembly 680. The fixing assembly 10 is configured to be mounted on the body 700 of the autonomous mobile device 1. One end of the linkage assembly 680 is rotatably connected to the fixing assembly 10, and another end of the linkage assembly 680 is rotatably connected to the driving member 630, so that the driving member 630, the cutting member 620, and the abutting member 640 as a whole are capable of moving up and down relative to the fixing assembly 10 through the linkage assembly 680. Thus, through the arrangement of the linkage assembly, the abutting member 640 is capable of driving the cutting member 620 to be raised under an action of an external force, for example, when being pushed up by ground or an object such as a stone on the ground, so that the driving member 630, the cutting member 620, and the abutting member 640 as a whole may float up and down according to ground height to adapt to terrain undulations.

The cutting member 620 is described in detail: a cutting blade 100 may be configured to be mounted on the autonomous mobile device 1 to perform a cutting action.

The autonomous mobile device 1 is, for example, a lawn mower. Specifically, the cutting blade 100 is configured to connect to the lawn mower, and is capable of moving under control of the lawn mower to complete a preset cutting action. For example, the cutting action includes but is not limited to reciprocating in a preset cutting direction, or making a circular motion around a preset center, or performing other set actions. Wherein, the cutting blade includes a base 920, a plurality of cutting members 930 disposed on the base 920, and a plurality of protection members 940 disposed on the base 920. Each part of the cutting blade 100 is specifically described below.

Specifically, the protection members 940 are located on both sides of each cutting member 930 along an extending direction of the base 920. In a protruding direction of the cutting member 930, a height of the protection members 940 is greater than a height of the cutting member 930, and the protruding direction of the cutting member 930 is perpendicular to the extending direction of the base 920.

When the cutting blade 100 moves to complete the preset cutting action, if the cutting blade 100 moves toward the protruding direction of the cutting member 930, the cutting member 930 may be configured to cut a target object located in the protruding direction of the cutting member 930. The target object is, for example, an object such as a grass leaf or a branch.

Since the height of the protection members 940 is greater than the height of the cutting member 930 in the protruding direction of the cutting member 930, during the process of the cutting blade 100 moving toward the protruding direction of the cutting member 930 to cut the target object, for an object with a relatively small size, it will first contact the protection member 940 and then contact the cutting member 930, and the cutting member 930 cuts the target object. While for some objects with a relatively large size, the target object is capable of avoiding being cut by the cutting member 930 of the cutting blade 100 under a protection effect of the protection members 940, thereby greatly improving safety of the cutting action.

Therefore, in the embodiments of this disclosure, the protection members 940 are provided to improve cutting safety of the cutting blade 100, and avoid injury to a person or object inadvertently touching a blade edge, so as to meet practical use requirements.

Preferably, in the cutting blade 100 provided by the embodiments of this disclosure, the cutting member 930 and the protection members 940 are integrally formed, so that manufacturing costs of the cutting blade 100 are reduced and it is easy to manufacture.

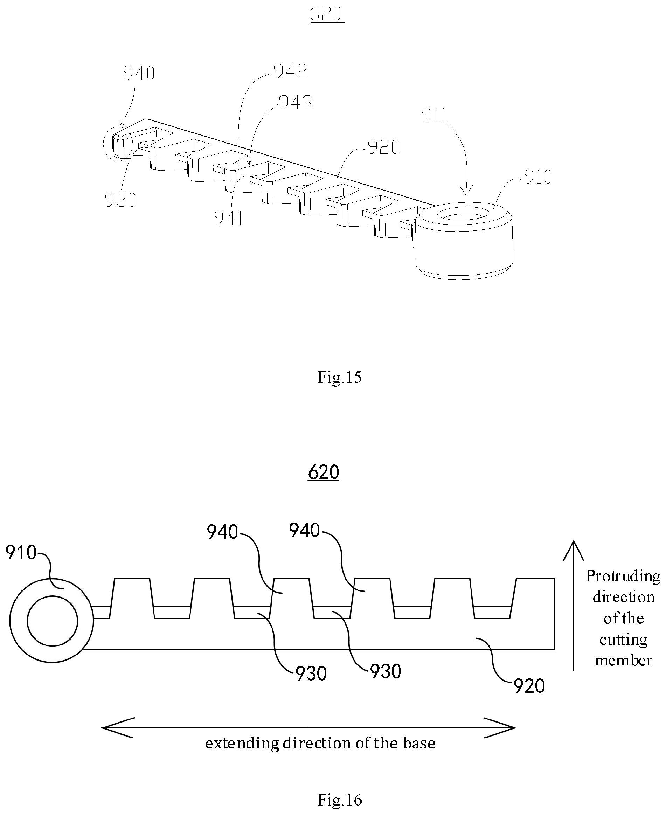

As shown in FIG. 15 to FIG. 19, in some implementation manners, a plurality of cutting members 930 and a plurality of protection members 940 are arranged along the extending direction of the base 920, and one cutting member 930 is disposed between any two adjacent protection members 940.

Specifically, for a single cutting member 930, the protection members 940 are disposed on two opposite sides of the cutting member 930 in the extending direction of the base 920. For two adjacent cutting members 930, one cutting member 930 is connected to another cutting member 930 through a protection member 940. That is, on a surface of the base 920, the plurality of cutting members 930 and the plurality of protection members 940 are alternately arranged along the extending direction of the base 920.

It should be understood that the cutting member 930 is configured to cut a contacted target object, and the protection members 940 are capable of effectively protecting an object with a relatively large size from being cut by the cutting member 930. Therefore, the plurality of cutting members 930 and the plurality of protection members 940 are arranged at intervals along the extending direction of the base 920, which is capable of taking both cutting effects and protection effects at various locations in the extending direction of the base 920 into consideration.

Specifically, when a width of a non-cutting object is greater than a distance between two adjacent protection members 940, the non-cutting object will not enter between the two adjacent protection members 940, and the cutting member 930 is capable of playing a relatively good protection effect. Therefore, the cutting blade 100 provided by the embodiments of this disclosure is capable of effectively preventing accidental injury to non-cutting objects such as a human body or an animal.

In some implementation manners, a distance between adjacent two protection members 940 is smaller than a width of a human finger. It should be noted that the finger width is set based on sampled finger width data of a plurality of people, to prevent a user's finger from entering between the adjacent two protection members 940 and being accidentally injured by the cutting member 930 when the cutting blade cuts, which leads to injury to the user.

As shown in FIG. 15 to FIG. 19, in some implementation manners, the protection members 940 are formed in a zigzag shape.

In some other implementation manners, the cutting member 930 is formed with a blade edge.

It should be pointed out that the above two implementation manners may be implemented separately or in combination. Wherein, the zigzag-shaped protection members 940 and/or the blade edge formed at the cutting member are configured to provide a cutting function to ensure that a target object entering between two adjacent protection members 940 is cut.

Taking a target object being a grass leaf and the protection members 940 being formed in a zigzag shape as an example, when the cutting member 930 cuts the grass leaf, even if the cutting member 930 fails to completely cut off the grass leaf at one time, the zigzag-shaped protection members 940 may perform a secondary tearing on the grass leaf in a zigzag forming direction to ensure a cutting effect.

As shown in FIG. 15, in some other implementation manners, the protection member 940 has a first surface 941 and a second surface 942, and an edge 943 is formed at an intersection of the first surface 941 and the second surface 942.

Specifically, the first surface 941 is a surface of a tearing portion 141 close to a side of the cutting member 930, and the second surface 942 is a surface of the tearing portion 141 extending along an extending direction of the base 920.

It should be noted that the above three implementation manners: the protection member 940 being formed in a zigzag shape, the cutting member being formed with a blade edge 140, and the protection member 940 forming an edge 943 at the intersection of the first surface 941 and the second surface 942, may be implemented separately or in combination. Through the above implementation manners or similar tearing structure designs, when the cutting member 930 cuts a grass leaf, if the cutting member 930 fails to completely cut off a target object (e.g., grass leaf, branch, etc.) at one time, the zigzag-shaped protection members 940 and/or the edge 943 formed by the protection member 940 may perform a secondary tearing on the target object in its forming direction, to improve a tearing effect of the cutting blade 100 on the target object.

Therefore, the cutting blade 100 provided by the embodiments of this disclosure adopts corresponding tearing structure designs, and is capable of improving a cutting effect of the cutting blade 100 and its applicability and cutting effect for cutting different target objects on a premise of ensuring cutting safety, especially for target objects entering between two adjacent protection members 940, which further improves cutting work efficiency to meet practical use requirements.

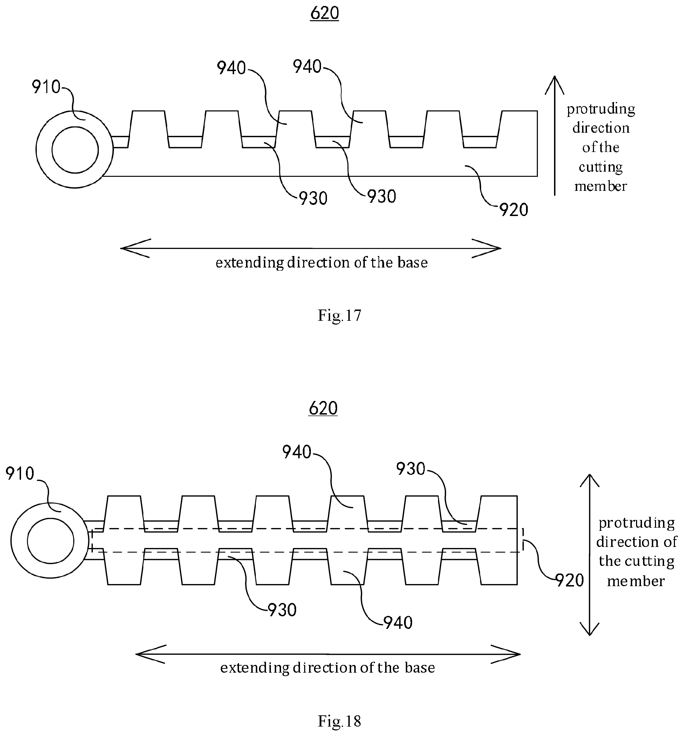

As shown in FIG. 17 to FIG. 19, in some implementation manners, in the extending direction of the base 920, a width of the protection member 940 close to a side of the base 920 is greater than a width on a side facing away from the base 920.

For example, the protection member 940 has a trapezoidal shape. Specifically, in the extending direction of the base 920, a side of the protection member 940 close to the base 920 is wide, and a side facing away from the base 920 is narrow. It should be understood that the arrangement of the protection member 940 is convenient for objects such as grass leaves and branches to enter between adjacent two protection members 940, so that more grass leaves and branches are cut by the cutting member 930 of the cutting blade 100, thereby improving cutting effects and cutting efficiency.

As shown in FIG. 15 to FIG. 19, in some implementation manners, the cutting member 930 and the protection members 940 are disposed on a same side of the base 920, or, the cutting members 930 and the protection members 940 are both distributed on two opposite sides of the base 920.

For example, in the cutting blade 100 shown in any of FIG. 15 to FIG. 17, the cutting member 930 and the protection members 940 are disposed on the same side of the base 920. As another example, in the cutting blade 100 shown in FIG. 18, cutting members 930 and protection members 940 are provided on two opposite sides perpendicular to the extending direction of the base 920. In a protruding direction of the cutting member 930 on either side, a height of the protection members 940 on a same side is greater than a height of the cutting member 930.

It should be understood that by disposing the cutting members 930 on two opposite sides of the base 920, during a process of the autonomous mobile device 1 driving the cutting blade 100 to move in either of two protruding directions of the cutting members 930, the cutting blade 100 is capable of achieving effective cutting through a cutting member 930 on a same side as a moving direction, thereby improving adaptability of the cutting blade 100 to different cutting actions.

As shown in FIG. 15 to FIG. 19, in some implementation manners, the cutting blade 100 further comprises a driving connection portion 910 connected to the base 920. The driving connection portion 910 is formed with a matching hole 911 adapted for connecting to a driving assembly.

Wherein, when the driving assembly is adapted to the driving connection portion 910, the driving assembly and the matching hole 911 form a hole-shaft match.

For example, the driving assembly 200 is disposed in the cutting mechanism 10, and the driving assembly 200 is adapted to the driving connection portion 910 to drive the cutting blade 100 to perform a cutting motion. Wherein, the matching hole 911 on the driving connection portion 910 is configured to match with the driving assembly 200 via a hole-shaft match, so that the driving assembly 200 is capable of driving the cutting blade 100 to make a rotational motion around the driving assembly 200 to perform corresponding cutting actions.

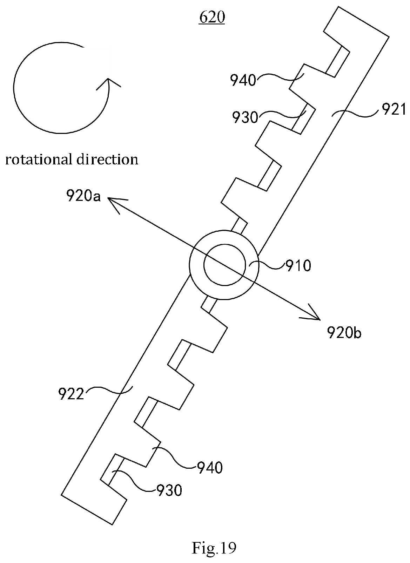

As shown in FIG. 19, in some implementation manners, the base 920 includes a first base portion 921 and a second base portion 922 disposed on opposite sides of the driving connection portion 910, and cutting members 930 and protection members 940 are disposed on both the first base portion 921 and the second base portion 922.

Specifically, at least one cutting member 930 and at least one protection member 940 are disposed on both the first base portion 921 and the second base portion 922, and the first base portion 921 and the second base portion 922 are respectively connected to the opposite sides of the driving connection portion 910. Therefore, when the cutting blade 100 performs a motion under driving of the autonomous mobile device 1, a cutting area of the cutting blade 100 is enlarged, and a cutting effect is also effectively improved.

In some implementation manners, the cutting member 930 on the first base portion 921 is at least disposed on a third side of the base 920, and the cutting member 930 on the second base portion 922 is at least disposed on a fourth side of the base 920. The third side and the fourth side are two opposite sides perpendicular to the extending direction of the base 920.

For example, in FIG. 19, since the cutting member 930 on the first base portion 921 is at least disposed on the third side of the base 920, and the cutting member 930 on the second base portion 922 is at least disposed on the fourth side of the base 920, when the autonomous mobile device 1 drives the cutting blade 100 to make a rotational motion around the driving connection portion 910 to cut a target object (for example, driving the cutting blade 100 to make a rotational motion in a rotational direction shown in FIG. 19), the cutting member 930 on the first base portion 921 disposed on a first side of the base 920 and the cutting member 930 on the second base portion 922 disposed on a second side of the base 920 are respectively capable of cutting target objects on same sides as themselves, improving cutting area and cutting efficiency.

It should be understood that in some implementation manners, the cutting members 930 on the first base portion 921 may also be disposed on two opposite sides of the base 920, and the cutting members 930 on the second base portion 922 may also be disposed on two opposite sides of the base 920. That is, a part of the cutting members 930 are disposed on a first side of the first base portion 921 and the second base portion 922, while another part of the cutting members 930 are disposed on a second side of the first base portion 921 and the second base portion 922.

Thus, when the autonomous mobile device 1 drives the cutting blade 100 to make rotational motions around the driving connection portion 910 in two opposite directions, corresponding cutting actions may be performed, thereby improving cutting efficiency of the cutting blade 100 and adaptability to execute different cutting actions.

Without conflicting with each other, those skilled in the art may combine and integrate different embodiments or examples described in this specification as well as features of different embodiments or examples.

The above are only specific implementation manners of this disclosure, but a protection scope of this disclosure is not limited thereto. Any person skilled in the art who is familiar with this technical field may easily conceive of various equivalent modifications or substitutions within a technical scope disclosed in this disclosure, and these modifications or substitutions shall all be covered within the protection scope of this disclosure. Therefore, the protection scope of this disclosure shall be subject to a protection scope of the claims.

## Claims

1. A lifting mechanism, comprising:
a fixing assembly, configured to be mounted to a body of an autonomous mobile device;
a first link member having a first end and a second end opposite to the first end, wherein the first end being rotatably connected to the fixing assembly, the second end being configured to be rotatably connected to a cutting mechanism of the autonomous mobile device, the first link member is rotatable in a first rotational direction and a second rotational direction, and the first rotational direction is opposite to the second rotational direction;
a second link member having a third end and a fourth end opposite to the third end, wherein the third end being rotatably connected to the fixing assembly, the fourth end being configured to be rotatably connected to the cutting mechanism of the autonomous mobile device, and the second link member is rotatable in the first rotational direction and the second rotational direction; and
an adjusting member connected to the first link member, the adjusting member having an abutting end facing the second link member, wherein when the first link member rotates to a first position in the first rotational direction and the second link member rotates to a second position in the first rotational direction, the abutting end abuts against the second link member;
wherein the adjusting member is configured to adjust a distance between the abutting end and the first link member.

2. The lifting mechanism according to claim 1, wherein respective rotational axes of the first end, the second end, the third end, and the fourth end are arranged in parallel to each other, four projection points of the rotation axes of the first end, the second end, the third end, and the fourth end on a first plane are connected to form a parallelogram, and the first plane being perpendicular to the rotational axes of the first end, the second end, the third end, and the fourth end.

3. The lifting mechanism according to claim 1, wherein the adjusting member comprises a rod body, the rod body being threadedly connected to the first link member, a first end of the rod body faces the second link member to form the abutting end, wherein rotation of the rod body drives the abutting end toward or away from the first link member.

4. The lifting mechanism according to claim 3, wherein the adjusting member further comprises a knob, wherein the knob is connected to a second end of the rod body.

5. The lifting mechanism according to claim 3, wherein a connecting line between the first end and the second end is perpendicular to the rod body.

6. The lifting mechanism according to any one of claims 1 to 5, wherein the first link member and the second link member are arranged in parallel.

7. The lifting mechanism according to any one of claims 1 to 5, wherein the first link member has a first inner wall facing the second link member, the second link member has a second inner wall disposed opposite to the first inner wall, and wherein, when the first link member rotates in the first rotational direction to the first position and the second link member rotates in the first rotational direction to the second position, the abutting end abuts against the second inner wall to limit rotation of the first link member and the second link member in the first rotational direction.

8. The lifting mechanism according to claim 7, further comprising an elastic member sleeved on the adjusting member and abutting between the first inner wall and the second inner wall, wherein the elastic member being configured to provide an elastic force.

9. The lifting mechanism according to claim 8, further comprising a gasket disposed between the elastic member and the second inner wall.

10. An autonomous mobile device, comprising:
a body;
a cutting mechanism; and
the lifting mechanismaccording to any one of claims 1 to 9;
wherein the cutting mechanism is configured to cut a target object, the lifting mechanism is connected to the body and the cutting mechanism such that the cutting mechanism is capable of moving upward or downward.

11. The autonomous mobile device of claim 10, wherein the cutting mechanism comprises:
a mounting member;
a cutting member mounted on the mounting member, wherein the cutting member is configured to cut the target object;
a driving member configured to drive the mounting member to move, such that the mounting member to drive the cutting member to move within a preset region; and
an abutting member located below the mounting member and configured to abut against an object below the preset region.

12. The autonomous mobile device of claim 11, wherein the cutting member has a first side and a second side disposed opposite to each other, the driving member is located on the first side of the cutting member, the abutting member is located on the second side of the cutting member, and the preset region is located between the driving member and the abutting member.

13. The autonomous mobile device of claim 12, wherein a side of the abutting member facing away from the cutting member has an abutting surface; a distance between an edge of the abutting surface to the cutting member is less than a distance between a center of the abutting surface to the cutting member; or, the distance between the edge of the abutting surface to the cutting member is equal to the distance between the center of the abutting surface and the cutting member.

14. The autonomous mobile device according to any one of claims 1 to 13, wherein the mounting member is connected to an output shaft of the driving member, and the abutting member is connected to the mounting member.

15. The autonomous mobile device according to claim 14, wherein the mounting member and the abutting member are connected by a first connecting member, and the first connecting member extends through the cutting member.

16. The autonomous mobile device according to claim 15, wherein the first connecting member includes a first protruding post and a fastener, the first protruding post is disposed on one of the mounting member and the abutting member, and is located between the mounting member and the abutting member, an end of the cutting member is provided with an annular protrusion corresponding to the first protruding post , the annular protrusion is sleeved on the first protruding post, and the fastener extends through the first protruding post and the annular protrusion and is fixed to the other one of the mounting member and the abutting member .

17. The autonomous mobile device of claim 15, wherein a number of the cutting members is two ;
the mounting member and the abutting member are connected by two of the first connecting members, each of the first connecting members cooperates with one of the cutting members, and the cutting member is rotatable about the first connecting member.

18. The autonomous mobile device of claim 17, wherein the mounting member and the abutting member are further connected by two connecting members; wherein when a first cutting member of the two cutting members rotating clockwise to a first position, the first cutting member abuts against one of the two connecting members, when a second cutting member of the two cutting members rotating clockwise to a second position, the second cutting member abuts against another of the two second connecting members, when the first cutting member rotating counterclockwise to a third position, the first cutting member abuts against the another of the two connecting members, and when the second cutting member rotating counterclockwise to a fourth position, the second cutting member abuts against the one of the two second connecting members.

19. The autonomous mobile device of claim 11, wherein the cutting member comprises:
a base;
a plurality of cutting portions disposed on the base; and
a plurality of protection members disposed on the base;
wherein the protection members are located on both sides of each of the plurality of cutting portions along an extending direction of the base, in a protruding direction of the cutting portions, a height of the protection members is greater than a height of the cutting portions, and the protruding direction of the cutting portions is perpendicular to the extending direction of the base.

20. The autonomous mobile device of claim 10, wherein a plurality of cutting portions and a plurality of protection members are arranged along an extending direction of the base, and one cutting portion is disposed between any two adjacent protection members.
